Europäisches Patentamt

European Patent Office

Office européen des brevets

(11) Veröffentlichungsnummer: **0 454 885 A1**

# EUROPÄISCHE PATENTANMELDUNG

(21) Anmeldenummer: 90108331.1

(22) Anmeldetag: 02.05.90

(51) Int. Cl.⁵: **B01D 53/34**

(43) Veröffentlichungstag der Anmeldung:
06.11.91 Patentblatt 91/45

(84) Benannte Vertragsstaaten:
**AT BE CH DE DK ES FR GB GR IT LI LU NL SE**

(71) Anmelder: **FTU GMBH**
**Mühlbergstrasse 1/B**
**W-8130 Starnberg(DE)**

(72) Erfinder: **Suchenwirth, Hermann,**
**Dr.,Dipl.Chem.**
**Graf-Rasso-Strasse 34**
**W-8022 Grafrath(DE)**

(74) Vertreter: **Diehl, Hermann Dr. et al**
**Diehl & Glaeser, Hiltl & Partner**
**Flüggenstrasse 13**
**W-8000 München 19(DE)**

(54) Verfahren zur Reinigung von Gasen und Abgasen von Schadstoffen.

(57) Die Erfindung betrifft ein Verfahren zur Reinigung von Gasen und Abgasen von Schadstoffen mit schwefelhaltigen Substanzen,das dadurch gekennzeichnet ist, daß dem Gas- bzw. Abgasstrom feinpulvriges Calciumhydroxid, schwefelhaltige Substanzen und oberflächenaktive Substanzen zugesetzt werden und die Feststoffe an Flachenfiltern abgeschieden werden.

Als schwefelhaltige Substanzen kommen Schwefel und Thiosulfat in Betracht. An oberflächenaktiven Substanzen werden Aktivkohle und Kieselgel eingesetzt.

Abgeschieden werden Schwermetalle und organische Schadstoffe.

Die Erfindung betrifft ein Verfahren zur Reinigung von Gasen und Abgasen von Schadstoffen, insbesondere von flüchtigen Schwermetallen und/oder organischen Stoffen.

Bei thermischen Prozeßen, z.B. Hüttenprozessen, Kohlefeuerungen und Abfallverbrennungen und zahlreichen industriellen Verfahren werden Abgase erzeugt, die mit flüchtigen Schwermetallen, z.B. Cadmium, Quecksilber, Thallium, Arsen, Antimon und Blei belastet sind. Es handelt sich dabei um elementare Schwermetalle oder Salze, vorzugsweise Chloride und Oxide. Weiterhin enthalten sie noch in vielen Fällen organische Schadstoffe, z.B. Dioxine, Furane, Aromaten und dergleichen.

Üblicherweise werden die Gase abgekühlt und die Schadstoffe naß ausgewaschen. Häufig ist dies nicht ausreichend, wenn die Schwermetalle in elementarer Form vorliegen. Quecksilber z.B. wird vielfach als Element emittiert. Es läßt sich dann auch über eine Naßwäsche nicht aus dem Gas abtrennen. Hinzu kommt noch das Problem, daß flüchtige Schwermetalle auch nach der Naßwäsche als Aerosole und/oder schwerabscheidbarer Feinstaub emittiert werden. Auch die organischen Schadstoffe werden nur unzureichend abgeschieden.

Eine andere Methode besteht darin, Abgasströme über Aktivkohle-Filter zu leiten. Dies führt zu einer Verminderung des Gehaltes an flüchtigen Schadstoffen, z.B. von Quecksilber, doch ist dieses Verfahren mit erheblichen Kosten belastet, da große Mengen hochaktiver Kohle eingesetzt werden müssen und immer die Gefahr der Schwelbrände im Kohlebett besteht. Über den stets vorhandenen Abrieb wird außerdem schadstoffhaltiger Feinstaub emittiert, der schwierig abzuscheiden ist.

Es hat deshalb nicht an Versuchen gefehlt, z.B. die flüchtigen Schadstoffe z.B. Schwermetalle mit Schwefel oder Sulfiden in schwerflüchtige Sulfide umzusetzen und aus dem Gasstrom abzuscheiden.

Ein derartiges Verfahren besteht darin, Schwefel auf Aktivkohle aufzubringen und den Gasstrom darüber zu leiten. Die Quecksilberabscheidung und die Abtrennung organischer Schadstoffe ist zwar recht wirksam, doch bleiben die Probleme der Selbstentzündung und der Emission von Abrieb bestehen.

Es liegt demnach das Bedürfnis vor, aus den Gasströmen, vornehmlich von Abfallverbrennungsanlagen, flüchtige Schwermetalle, insbesondere Quecksilber, in ihren verschiedenen Verbindungsformen und auch als Elemente, gezielt und eventuell ohne Abkühlungsvorgänge abzuscheiden, aber auch organische Schadstoffe, wie Dioxine und Furane. Weiterhin besteht die Aufgabe, ein einfaches und kostengünstiges Verfahren zur gemeinsamen Abscheidung von flüchtigen Schadstoffen und sauren Bestandteilen aus Gasströmen zu entwickeln. Dabei muß die Verminderung des Schadstoffgehaltes im Abgasstrom so hoch sein, daß die bestehenden Grenzwerte, z.B. für Hg, Cd, Tl und Dioxine/Furane, sicher eingehalten werden können.

Die Erfindung löst diese Aufgaben dadurch, daß dem Gas- bzw. Abgasstrom feinpulvriges, trockenes Calciumhydroxid oder feinpulvriges Calciumhydroxid mit einem Wassergehalt von 0.1 bis 5 Gew.-% vorzugsweise 0,5 bis 3 Gew.-% mit einem Gehalt an wasserlöslichen Salzen schwefelhaltiger Substanzen und oberflächenaktiven Substanzen oder Calciumhydroxid mit oberflächenaktiven Substanzen, auf die wasserlöslichen Salze schwefelhaltiger Substanzen oder Schwefel aufgetragen sind, oder Calciumhydroxid und oberflächenaktive Substanzen gemischt mit Schwefel zusetzt und die sulfidierten Schwermetalle und die an Calciumhydroxid und/oder die oberflächenaktiven Substanzen adsorbierten Schadstoffe aus den Gas- und Abgasströmen an geeigneten Abscheidevorrichtungen, vorzugsweise Flächenfilter, abgeschieden werden. Bevorzugte Weiterbildungen der Erfindung sind in den abhängigen Patentansprüchen beschrieben. Die Patentansprüche sind als erster Versuch zu verstehen, die Erfindung in allgemeinen Worten zu formulieren, sie sollen jedoch nicht als Einschränkung des Schutzbegehrens verstanden werden.

Weitere Einzelheiten der Erfindung ergeben sich aus der folgenden Beschreibung.

Erfindungsgemäß erfolgt die Lösung der gestellten Aufgabe in zwei Stufen dahingehend, daß in der 1. Stufe Calciumhydroxide hergestellt werden, die wasserlösliche Salze schwefelhaltiger Substanzen und oberflächenaktive Substanzen enthalten, welche in einer 2. Stufe in einem trockenen oder quasitrockenen Verfahren zur Einwirkung auf die flüchtigen, d.h. dampfförmigen Schadstoffe, wie Schwermetalle des Abgases gebracht und wieder aus dem Abgasstrom abgeschieden werden.

Ein wesentlicher Vorteil der wasserlöslichen Salze schwefelhaltiger Substanzen besteht darin, daß sie in Wasser gelöst während des Löschprozesses oder nach dem Löschen feinstverteilt auf das Calciumhydroxid aufgebracht werden können. Auch das Aufbringen auf oberflächenaktive Substanzen wird sehr erleichtert. Die Feinstverteilung begünstigt die Reaktionen mit den Schwermetallen und den flüchtigen organischen Schadstoffen erheblich.

Hinzu kommt, daß sich auf Calciumhydroxid und auf den oberflächenaktiven Substanzen Wasserfilme bilden, die die Salze anteilig auflösen. Schwermetalle, die als Salze flüchtig sind, lösen sich in dem Wasserfilm und reagieren schnell mit den Salzen der schwefelhaltigen Verbindungen.

Die Abscheidung der flüchtigen Schwermetalle wird durch diese Mechanismen sehr erleichtert.

In Abänderung des eigentlichen Erfindungsgedanken ist es jedoch auch möglich, wasserunlöslichen Schwefel einzusetzen, der dann aber zur besseren Verteilung mit oberflächenaktiven Substanzen kombiniert oder beim Löschprozeß von Branntkalk feinstverteilt auf das Calciumhydroxid aufgebracht wird.

Erfindungsgemäß werden als wasserlösliche Salze schwefelhaltiger Substanzen Mercaptane, Sulfide, Polysulfide, Polythionate und Thiosulfate, insbesondere im Form der Alkali- und Erdalkaliverbindungen, eingesetzt. Zu den Sulfiden wird auch Schwefelwasserstoff gerechnet. Thiosulfat und Polysulfide stellen dabei eine besondere Gruppe dar, da sie unter Einwirkung von Säuren und/oder Hitze, also unter Reaktionsbedingungen, Schwefel abgeben.

Dieser Schwefel wird in feinstverteilter Form gebildet und ist zur Bindung von flüchtigen Schwermetallen der verschiedensten Formen sehr geeignet. Da die Abgasströme aus Abfallverbrennungsanlagen und auch aus anderen Verbrennungssystemen immer Säuren enthalten, ist die Ausscheidung von Schwefel aus Thiosulfat gewährleistet.

Eine weitere Verbindungsklasse sind die wasserlöslichen Mercaptane, d.h. organische Verbindungen mit Schwefelwasserstoffgruppen.

Eine wesentliche Stoffgruppe von wasserlöslichen schwefelhaltigen Verbindungen sind Schwefelwasserstoff und die wasserlöslichen Sulfide. Sie reagieren mit den flüchtigen Schwermetallen und bilden unlösliche, schwerflüchtige Sulfide. Von den wasserlöslichen Sulfiden sind Natriumhydrogensulfid und Natriumsulfid, aber auch die anderen Alkali- und Erdalkalisulfide geeignet.

Ein Nachteil der Sulfide ist, daß sie bei hohen Temperaturen z.B. von 200 Grad C, im hohen Maße oxidiert werden und damit nicht mehr zur Abscheidung der flüchtigen Schwermetalle zur Verfügung stehen.

Als schwefelabgebende Stoffgruppe sind auch die Polysulfide der allgemeinen Formel $M_2S_n$, worin n die Werte 2, 3, 4, 5 und höher annehmen kann und M Metalle symbolisiert, geeignet. Diese Polysulfide scheiden bei der Einwirkung von Säuren Schwefel ab, der zusammen mit dem ebenfalls freigesetzten Schwefelwasserstoff in sehr aktiver Form auf die flüchtigen Schwermetalle einwirkt.

Als schwefelabgebende Verbindungen sind auch die Salze von Polythionsäuren verwendbar. Die Salze von Polythionsäuren zersetzen sich unter der Einwirkung von Säuren in Schwefel, schweflige Säure und Schwefelsäure. Der freiwerdende Schwefel ist ebenfalls zur Bindung von flüchtigen Schwermetallen in Gas- und Abgasströmen bestens geeignet.

Eine bevorzugte Ausführung des erfindungsgemäßen Verfahrens zur Reinigung von Gasen und Abgasen von flüchtigen Schwermetallen besteht nun darin, die angeführten wasserlöslichen Schwefelverbindungen zusammen mit Calciumhydroxid entweder auf Calciumhydroxid aufgetragen oder mit Calciumhydroxid gemischt zum Einsatz zu bringen.

Die erfindungsgemäße Herstellung von trockenen oder wasserhaltigen Pulvern auf der Basis von Calciumhydroxid für die Reinigung von Gasen und Abgasen von Schwermetallen erfolgt dadurch, daß vor dem Löschen von Branntkalk dem Branntkalk und/oder während des Löschens dem Löschwasser und/oder nach dem Löschen dem Calciumhydroxid wasserlösliche Salze schwefelhaltiger Substanzen oder oberflächenaktive Substanzen und wasserlösliche Salze schwefelhaltiger Substanzen oder Schwefel für sich allein oder Schwefel, aufgetragen auf oberflächenaktive Substanzen, zugesetzt werden.

Die Kombination von schwefelhaltigen Verbindungen mit Calciumhydroxid geschieht bevorzugt dadurch, daß die schwefelhaltigen Verbindungen dem zum Löschen erforderlichen Wasser zugesetzt werden.

Eine Ausführungsform besteht z.B. darin, daß Thiosulfate im Löschwasser gelöscht und diese Lösung zum Löschen von Branntkalk eingesetzt wird. Das Thiosulfat verteilt sich hierbei in feinster Form und gleichmäßig über das Calciumhydroxid und liegt deshalb in besonders reaktiver Form zur weiteren Umsetzung bereit.

Hierbei kann der Löschprozeß auch so ausgeführt werden, daß zuerst mit reinem Wasser teilgelöscht und dann die vollständige Löschung mit Wasser erfolgt, das die wasserlöslichen Salze schwefelhaltiger Substanzen enthält.

Es ist jedoch auch möglich, die angeführten schwefelhaltigen Verbindungen entweder in fester Form als feinste Pulver oder auch in gelöster, konzentrierter Form auf Calciumhydroxid aufzubringen.

Erfolgt eine nachträgliche Aufbringung auf Calciumhydroxid über Lösungen, dann fällt ein Calciumhydroxidpulver an, das bis zu 3 Gew.%, gelegentlich bis zu 5 Gew.% Wasser enthalten kann.

Eine andere Möglichkeit der Kombination der schwefelhaltigen Verbindungen und Calciumhydroxid besteht darin, daß diese dem Branntkalk zugegeben werden und der Branntkalk anschließend gelöscht wird. In all diesen Fällen liegen die schwefelhaltigen Verbindungen in feinster Form verteilt in Calciumhydroxid vor. Ein wesentlicher Vorteil dieses Herstellungsverfahrens liegt darin, daß Branntkalk und die schwefelhaltigen Verbindungen intensiv vorgemischt, z.B. im Kalkwerk, und dann beim Anwender gelöscht wird, u.a. auch zu Kalkmilch. Damit entfallen Zusatzeinrichtungen beim Anwender.

Diese Herstellungsverfahren können so gesteuert werden, daß die in den Ansprüchen 1 bis 8 angeführten und näher spezifizierten Mittel auf der Basis von Calciumhydroxid anfallen.

Dies bedeutet, daß der Gehalt an wasserlöslichen Salzen der schwefelhaltigen Substanzen im Bereich von 0,01 - 5 Gew.%, vorzugsweise 0,1 - 1 Gew.%, insbesondere 0,2 - 0,6 Gew.%, liegt.

Entsprechend der Belastung der Abgase mit flüchtigen Schwermetallen können hochdotierte Calciumhydroxide oder im laufenden Betrieb nach Regelung wechselnde Mengen dotierter Ca(OH)2-Mittel eingesetzt werden.

Die Kombination der angeführten schwefelhaltigen Verbindungen mit Calciumhydroxid ist insbesondere bei Einsatz von Schwefelwasserstoff oder schwefelwasserstoffbildenden Substanzen, z.B. Polysulfide od. Polythionsäuren, oder auch von Schwefelwasserstoff u. wasserlöslichen Sulfiden sehr geeignet. Da Calciumhydroxid im großen Überschuß zu den schwefelhaltigen Verbindungen eingesetzt wird, können freigesetzte Schwefelwasserstoff-Verbindungen sofort von Calciumhydroxid als Säuren neutralisiert werden. Bei weiterer Einwirkung von Sauerstoff bei erhöhter Temperatur werden dann die Sulfide in geruchlose Verbindungen, insbesondere Sulfite und Sulfate übergeführt.

Weiterhin ist darauf hinzuweisen, daß die Mittel neben den Gehalten an wasserlöslichen Salzen schwefelhaltiger Substanzen noch 0,5 - 10 Gew.% oberflächenaktive Substanzen aufweisen.

Als oberflächenaktive Substanzen kommen Aktivkohle, Herdofen-Braunkohlenkoks, Kieselgel, Kieselgur, Leolithe und/oder aktiviertes Aluminiumoxid in Frage. Ihr Gehalt im Gemisch mit Ca(OH)2 beträgt 0,1 bis 50 Gew.% vorzugsweise 0,2 bis 35 Gew.%, insbesondere 0,4 bis 10 Gew.%. Bevorzugt werden Gemische mit weniger als 35 Gew.%, da dann keine Explosionsgefahr besteht.

Die beanspruchten schwefelhaltigen Substanzen können über wässrige Lösungen auf die oberflächenaktiven Substanzen aufgetragen werden oder mit diesen mechanisch gemischt werden.

Das Aufbringen auf die oberflächenaktiven Substanzen erfolgt am besten in einer eigenen Behandlungsstufe, kann jedoch mit gutem Erfolg während des Löschprozesses bewerkstelligt werden.

Das kann dadurch geschehen, daß die wasserlöslichen Salze schwefelhaltiger Substanzen und die oberflächenaktiven Substanzen mit Branntkalk gemischt und dieser dann gelöscht wird. Es ist jedoch auch möglich, Branntkalk mit den oberflächenaktiven Substanzen zu mischen und mit dann mit Wasser zu löschen, das die Salze der angeführten Substanzen enthält.

So lassen sich z.B. auf Herdofen-Braunkohlekoks die wasserlöslichen Sulfide, Polysulfide, Mercaptane, Thiosulfate und Polythionsäuren gut auftragen und durch Verdampfen des Wassers in trockener Form herstellen. Falls erforderlich, können diese schwefelabgebenden Verbindungen bereits mit Säuren vorbehandelt werden, so daß Schwefel feinst verteilt über die oberflächenaktiven Stoffe vorliegt.

Oberflächenaktive Stoffe sind zur Abscheidung von flüchtigen Schwermetallen und chlorierten und bromierten Diosunin und Furanen, polyaromatischen kohlenwasserstoffen, Halogenkohlenwasserstoffen und dergleichen sehr geeignet. Sie sind in dem meisten Fällen für sich allein schon schwermetallbindend, doch kann diese Wirkung noch durch die Anwesenheit von schwefelhaltigen Verbindungen stark gesteigert werden. Es handelt sich um trifunktionelle Stoffgemische. Ca(OH)2 bindet Säuren, Schwefel, die Schwermetalle, die oberflächenaktiven Stoffe und die organischen Schadstoffe.

Eine andere Form der Kombination von oberflächenaktiven Stoffen und der wasserlöslichen Salze schwefelhaltiger Substanzen, daß letztere in feinst verteilter Form mit den festen oberflächenaktiven Stoffen durch Mahlen oder auch Vermischen verbunden werden.

Mit Vorteil läßt sich auch die Kombination aus Calciumhydroxid, oberflächenaktive Substanzen und feinpuklveriger Schwefel einsetzen. Der Gehalt an Schwefel beträgt 0,5 - 5 Gew.%. Die Herstellung erfolgt entweder im Löschverfahren von Branntkalk oder nachträglich durch Zugabe eines Gemisches aus Schwefelpulver und oberflächenaktive Substanz.

Der Einsatz eines Gemisches aus Ca(OH)2/oberflächenaktive Substanz/Schwefel hat gegenüber den Verfahren des Standes der Technik erhebliche Vorteile. Der wesentliche Vorteil ist, daß bei den Abgasreinigungstemperaturen von 150 - 400 Grad C das Verbrennen von Schwefel ohne nachteilige Folgen ist. Entstehendes SO2 wird sofort von Ca(OH)2 absorbiert, auf einem Gewbefilter verbrennender Schwefel führt nicht zur Perforierung der dem Filter, da Ca(OH)2-Pulver eine Schutzschicht bildet.

Eine erfindungsgemäße Ausführungsform besteht darin, daß die Gas- bzw. Abgasströme mit Schwefelverbindungen im Temperaturbereich von 0-400 Grad C, vorzugsweise 20-300 Grad C, insbesondere 80 bis 250 Grad C, behandelt werden.

Bei Temperaturen oberhalb 400 Grad C besteht die Gefahr der raschen Verbrennung der schwefelhaltigen Verbindungen. Das Hauptanwendungsgebiet liegt im Temperaturbereich von 20 - etwa 300 Grad C. Mit 200-250 Grad C kommen die meisten Abgase aus Verbrennungsanlagen nach dem Kessel in die Reinigungsanlagen. Es ist deshalb von besonderem Interesse, die flüchtigen Schadstoffe aus den heißen Abgasen bei 200 bis 250°C abzuscheiden. Hierzu eignen sich insbesondere Schwefel, die Thiosulfate, die Polysulfide und die Salze von Polythionsäuren, in Kombination mit nichtbrennbaren oberflächenaktiven Substanzen. Ganz besonders geeignet sind Schwefel und die Thiosulfate, da sie temperaturstabil sind und bei hohen Temperaturen rasch mit den flüchtigen Schwermetallen zu reagieren vermögen.

4

EP 0 454 885 A1

Das Verhältnis der Schwefelverbindungen zu den abzuscheidenden Schwermetallen ist dadurch gekennzeichnet, daß die in äußerst geringen Mengen vorliegenden Schwermetallen ohne besondere wirtschaftliche Kosten mit deutlichen Überschuß an schwefelhaltigen Verbindungen behandelt werden können. Erfindungsgemäß ist es angebracht, Natriumthiosulfat auf Quecksilber in 1 bis 1000-facher Menge, vorzugsweise 25-500-facher Menge einzusetzen. Menge bedeutet, daß auf eine Gewichtseinheit Quecksilber bei 1-facher Menge die gleiche Gewichtseinheit Natriumthiosulfat gesetzt wird.

Der bevorzugte Anwendungsbereich liegt bei 25-500-facher Menge. Mit einer derartigen Stöchiometrie lassen sich sicher die flüchtigen Schwermetalle abscheiden, ohne daß das Verfahren unwirtschaftlich wird.

Bei Anwendung von Schwefel hat es sich herausgestellt, daß der Mengenbereich bei 50-2000,vorzugsweise bei 25-500 liegt.

Der Vorteil von Schwefel abgebenden Verbindungen, wie Thiosulfate, liegt eben darin, daß der Schwefel in feinst verteilter Form bei der Zersetzung unter Einwirkung von Säuren auftritt.

Der wesentliche Vorteil des erfindungsgemäßen Verfahrens ist darin zu sehen, daß die zur Bindung der flüchtigen Schwermetalle der Abgase eingesetzten wasserlöslichen Salze schwefelhaltiger Substanzen mit erheblichen Mengen $Ca(OH)_2$-Pulver als Träger in den Gasstrom eingebracht werden können. Dies bedeutet eine sichere Verteilung der schwefelhaltigen Substanzen im Gasstrom. Außerdem liegt bei Verwendung eines Gewebefilters eine Reaktionsschicht vor, die das zu reinigende Abgas passieren muß.

$Ca(OH)_2$ hat demnach nicht nur die Funktion eines Säurebinders sondern auch die Aufgabe den schwefelhaltigen Substanzen Reaktionsflächen und Reaktionmöglichkeiten zu schaffen.

Weiterhin hat $Ca(OH)_2$ die Aufgabe, aus Schwefel oder den schwefelhaltigen Substanzen entstehende Oxidationsprodukte, z.B. $SO_2$ oder $SO_3$, neutralisierend abzufangen. Es können die S-haltigen Substanzen deshalb in hohem Überschuß zu den flüchtigen Schwermetallen eingesetzt werden, da die Emission von $SO_2$ und $SO_3$ nicht zu erwarten ist. Die Abscheidung der flüchtigen Schwermetalle kann also problemlos bis 100% getrieben werden. Auch $NO_2$ wird abgefangen.

Selbst bei den hohen Reaktionstemperaturen von 200 Grad C werden die flüchtigen Schwermetalle mit Abscheidegraden von mehr als 70 % abgeschieden.

Sinngemäß lassen sich erfindungsgemäßen Merkmale auch auf die Sprühsorption übertragen. Dies bedeutet, daß die erfindungsgemäß hergestellten Mittel in Wasser suspendiert und in den zu reinigenden Gas- bzw. Abgasstrom eingedüst werden können. Es kann auch Branntkalk eingesetzt werden, dem die .wasserlöslichen Salze schwefelhaltiger Substanzen zugemischt worden sind. Bei der Herstellung von Kalkmilch in der Anlage wird dann eine Suspension erhalten, die ebenfalls im Sinne der Erfindung eingesetzt werden kann.

Die aus den Schwefelverbindungen und den flüchtigen Schwermetallen sowie die an die oberflächenaktiven Stoffe gebundenen Schadstoffe können an den herkömmlichen Filtern, vorzugsweise Gewebefilter oder an elektrostatischen Filter, in Zyklonen oder auch über die Naßwäsche abgeschieden werden.

Das Verfahren ist zur Behandlung von Gasen und Abgasen aus Produktionsprozessen, z.B. Hüttenprozesse, Chloralkalielektrolyse, Hochofenprozesse und von Abgasen aus Kraftwerken, Abfallverbrennungs-, Sondermüllverbrennungsanlagen, Anlagen der Glas- und Keramikindustrie, Feuerungsanlagen, Aluminium-Umschmelzwerke und Verbrennungsanlagen geeignet.

Eingesetzt werden kann es für folgende Abgasreinigungsverfahren: Trockensorption, Trockensorption mit Wasserkonditionierung und Sprühsorption sowie nach Naßwäschern.

Beispiel 1:

In 17 ml Wasser wurden 111 mg Natriumthiosulfat gelöst. Damit wurden 28 g Branntkalk gelöscht. Das trocken anfallende Calciumhydroxid wurde zur Abgasreinigung eingesetzt.

Über 265 mg dieses Produktes wurden bei 192 Grad C 10,5 l eines Abgases folgender Zusammensetzung geleitet:

| | |
|---|---|
| – Stickstoff | 80 Vol.-% |
| – Sauerstoff | 20 Vol.-% |
| – Feuchte | 289 mg/l |
| – HCl | 12,1 mg/l |
| – HgCl2 | 0,7 µg/l |

5

Von insgesamt 7,4 μg HgCl2 wurden 5,7 μg abgeschieden. Dies bedeutet einen Abscheidegrad von 76,8 %.

Beispiel 2:

28 g Branntkalk wurden mit 0,37 g Schwefelblüte gemischt und dann mit 17 ml Wasser gelöscht. Es entstand ein leicht gelbes, wasserfreies Produkt.

Über 268 mg dieses Produktes wurden bei 186 Grad C 11 l eines Abgases folgender Zusammensetzung geleitet:

| | | |
|---|---|---|
| – | Stickstoff | 80 Vol.-% |
| – | Sauerstoff | 20 Vol.-% |
| – | Feuchte | 273 mg/l |
| – | HCl | 11,5 mg/l |
| – | HgCl2 | 0,67 ug/l |

Von insgesamt 7,4 μg HgCl2 wurden 5,4 μg aus dem Abgas abgeschieden. Dies bedeutet einen Abscheidegrad von 73,3 %.

Beispiel 3:

1,85 g feinpulvriger Herdofen-Braunkohlekoks wurde mit 0,37g Schwefelblüte vermischt. Dieses Gemisch wurde dann mit 28 g Branntkalk gemischt.

Die Löschung von 28 g Branntkalk wurde mit 17 ml Wasser durchgeführt. Es entstand ein wasserfreies Produkt.

Über 283 mg dieses Produktes wurden bei 190 Grad C 10,3 l eines Abgases folgender Zusammensetzung geleitet:

| | | |
|---|---|---|
| – | Stickstoff | 80 Vol.-% |
| – | Sauerstoff | 20 Vol.-% |
| – | Feuchte | 292 mg/l |
| – | HCl | 12,3 mg/l |
| – | HgCl2 | 0,72 μg/l |

Von insgesamt 7,4 μg HgCl2 wurden 6,2 μg abgeschieden. Dies bedeutet einen Abscheidegrad von 84,2 %.

## Patentansprüche

1. Verfahren zur Reinigung von Gasen und Abgasen von Schadstoffen dadurch gekennzeichnet, daß dem Gas- bzw.

Abgasstrom feinpulvriges , trockenes Calciumhydroxid oder feinpulvriges Calciumhydroxid mit einem Wassergehalt von 0,1 - 5 Gew.%, vorzugsweise 0,5 - 3 Gew.%, mit einem Gehalt an wasserlöslichen Salzen schwefelhaltiger Substanzen und oberflächenaktiven Substanzen oder Calciumhydroxid mit oberflächenaktiven Substanzen, auf die wasserlösliche Salze schwefelhaltiger Substanzen oder Schwefel aufgetragen sind. oder Calciumhydroxid und oberflächenaktive Substanzen gemischt mit Schwefel zusetzt und die sulfidierten Schwermetalle und die an Calciumhydroxid und/oder die oberflächenaktiven Substanzen adsorbierten Schadstoffe sus den Gas- und Abgasströmen an geeigneten Abscheidevorrichtungen, vorzugsweise Flachenfilter, abgeschieden werden.

2. Verfahren nach Anspruch 1, dadurch gekennzeichnet, daß das Calciumhydroxid 0,1 bis 50 Gew.%, vorzugsweise 0.2 bis 35 Gew.%, insbesondere 0,4 bis 10 Gew.%, oberflachenaktive Substanzen enthält.

3. Verfahren nach den vorhergehenden Ansprüchen, dadurch gekennzeichnet, daß die Pulver eine Korngröße < 100 μm aufweisen.

4. Verfahren nach den vorhergehenden Ansprüchen dadurch gekennzeichnet, daß die wasserlöslichen Salze schwefelhaltiger Substanzen ausgewählt sind aus der Gruppe der Mercaptane. Sulfide, Polysulfide, Polythionate und Thiosulfate und/oder die oberflächenaktiven Substanzen aus der Gruppe Aktivkohle. Braunkohle-Herdofen-Koks aktiviertes Aluminiumoxid, Kieselgel, Kieselgur und Zeolithe.

5. Verfahren nach den vorhergehenden Ansprüchen, dadurch gekennzeichnet, daß Pulver eingesetzt werden, die 0,5 bis 6 Gew.% Schwefel enthalten, das auf die oberflächenaktiven Substanzen aufgetragen ist oder mit diesen gemischt wird oder gemischt wurde.

6. Verfahren nach einem der Ansprüche 1 bis 5, dadurch gekennzeichnet, daß die Gas- bzw. Abgasströme mit den Mitteln aus Calciumhydroxid, oberflächenaktive Substanzen und Schwefel/schwefelhaltige Substanzen im Temperaturbereich vo 0 bis 400° C, vorzugsweise 20 bis 300° C, insbesondere 80 bis 250° C, behandelt werden.

7. Verfahren nach den vorhergehenden Ansprüchen, dadurch gekennzeichnet, daß die wasserlöslichen Salze schwefelhaltiger Substanzen, insbesondere Natriumthiosulfat, im Verhaltnis zu den flüchtigen Schwermetallen, vorzugsweise Quecksilber, in 1 bis 1000 facher, vorzugsweise 25 bis 500-facher Menge eingesetzt werden.

8. Verfahren nach den vorhergehenden Ansprüchen, dadurch gekennzeichnet, daß Schwefel im Verhältnis zu den flüchtigen Schwermetallen, insbesondere Quecksilber, in 5 bis 2 000-facher Menge, vorzugsweise 25 bis 500-facher Menge, eingesetzt wird.

Europäisches
Patentamt

**EUROPÄISCHER
RECHERCHENBERICHT**

Nummer der Anmeldung

**EP 90 10 8331**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 911 329 (R.FICHTEL)<br>* Ansprüche 1-7, 16 *<br>– – – | 1,2,4,6,8 | B 01 D 53/34 |
| A | WO-A-8 809 203 (R,FICHTEL)<br>* Ansprüche 1, 5, 8, 13 *<br>– – – | 1,2,4-6 | |
| A | US-A-4 206 183 (M.YAMADA ET AL.)<br>* das ganze Dokument *<br>– – – | 1,6 | |
| A | GB-A-1 417 541 (PREUSSAG AG)<br>* Ansprüche 1-3 *<br>– – – – – | 1 | |

RECHERCHIERTE
SACHGEBIETE (Int. Cl.5)

B 01 D

Der vorliegende Recherchenbericht wurde für alle Patentansprüche erstellt

| Recherchenort | Abschlußdatum der Recherche | Prüfer |
|---|---|---|
| Berlin | 19 Dezember 90 | BERTRAM H E H |